# FASCICULE DE BREVET EUROPEEN

(11) **EP 0 691 643 B1**
(45) Date de publication et mention de la délivrance du brevet: **29.08.2001**
(21) Numéro de dépôt: 95401526.9
(22) Date de dépôt: 27.06.1995
(51) Int. Cl.: G11B 5/49, G11B 5/29

(54) **Dispositif de commande électrique à correction de diaphonie et application à des têtes magnétiques d'enregistrement/lecture**
Elektrische Steuervorrichtung mit Übersprechkorrektur und deren Anwendung mit Aufzeichnungs-/Wiedergabe-Magnetköpfen
Electrical control device with crosstalk cancelling and its application with magnetic recording/reproducing heads

(30) Priorité: 01.07.1994 FR 9408160
(43) Date de publication de la demande: 10.01.1996
(73) Titulaire: THOMSON-CSF, 75008 Paris (FR)
(72) Inventeur: Jolivet, Denis, F-92402 Courbevoie Cedex (FR)

(56) Documents cités:
- EP-A- 0 406 052
- EP-A- 0 467 737
- FR-A- 2 699 722
- NL-A- 7 510 306
- PATENT ABSTRACTS OF JAPAN vol. 14 no. 561 (P-1142) ,13 Décembre 1990 & JP-A-02 239415 (CANON INC.) 21 Septembre 1990,
- PATENT ABSTRACTS OF JAPAN vol. 17 no. 542 (E-1441) ,29 Septembre 1993 & JP-A-05 151580 (OLYMPUS OPTICAL CO. LTD.) 18 Juin 1993,
- PATENT ABSTRACTS OF JAPAN vol. 18 no. 387 (P-1773) ,20 Juillet 1994 & JP-A-61 010080 (SEIKO EPSON CORP.) 22 Avril 1994,
- DATABASE WPI Section EI, Week 9408 Derwent Publications Ltd., London, GB; Class U12, AN 94-065179 & US-A-5 289 410 (CALIFORNIA INST. OF TECHN.) , 22 Février 1994

## Description

L'invention concerne un dispositif de commande électrique à correction de diaphonie et son application à des têtes magnétiques d'enregistrement/lecture.

Elle est applicable à une source ou une matrice de dispositifs commandables électriquement tels que des dispositifs électromagnétiques (têtes magnétiques par exemple) ou des dispositifs optiques pour compenser la diaphonie pouvant exister entre dispositifs voisins.

Dans le cas de têtes magnétiques d'enregistrement/lecture, l'invention consiste en un dispositif physique et passif associé à une disposition d'éléments permettant de compenser électriquement la diaphonie magnétique qui existe dans le composant d'écriture multi-piste sur média magnétique.

Ce dispositif remplace un ensemble de composants passifs - résistances et capacités associées à leur connectique- disposés entre l'électronique de génération des courants d'écriture et les bobinages du composant d'écriture.

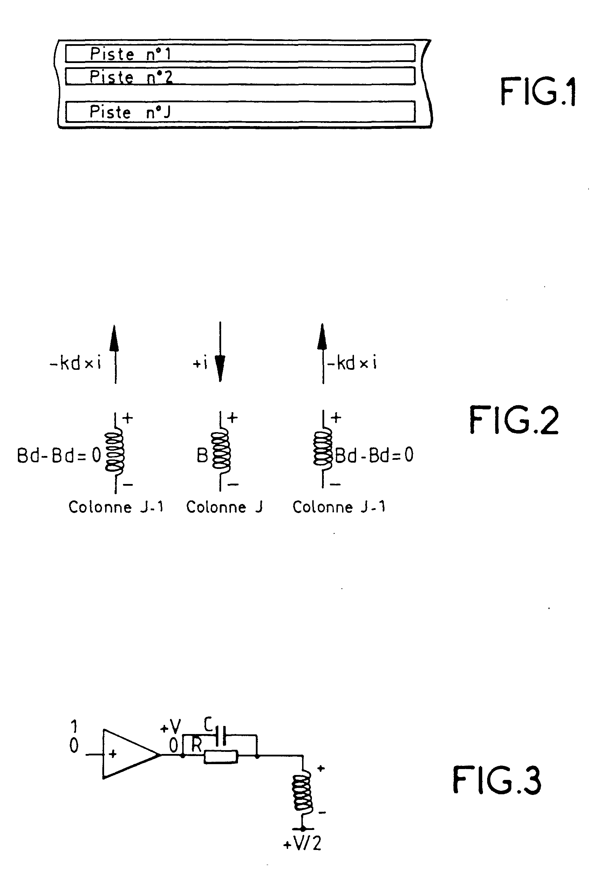

L'invention s'applique dans le cadre d'un système d'enregistrement et lecture de données sur média magnétique, où le format physique d'écriture des données sur bande est du type multi-pistes en parallèle, comme représenté sur la figure 1.

Lorsque ces pistes sont très rapprochées, le composant qui permet d'écrire selon ce format a une diaphonie à l'écriture qui devient préjudiciable à la qualité des données écrites.

La diaphonie magnétique à l'écriture se manifeste par une écriture partielle des données normalement destinée à une piste J sur les pistes voisines J-1 et J+1.

Par exemple un enregistreur magnétique multi-piste comporte un grand nombre de têtes magnétiques (1024 par exemple) permet d'écrire 1024 pistes sur une bande de 12,54 mm de hauteur. Un tel dispositif possède une structure matricielle ; les 1024 entrefers magnétiques sont répartis sur un parallélogramme de 16 colonnes de long et de 64 lignes de haut.

La forme géométrique de ce parallélogramme -essentiellement l'angle- est judicieusement choisi pour réaliser l'écriture des 1024 pistes sur la bande magnétique de façon adjacente et sans recouvrement entre pistes.

Chaque colonne et chaque ligne possède un bobinage adressé électriquement. En fonctionnement nominal, les courants parcourant les colonnes et les lignes ne génèrent pas un champ suffisant pour l'écriture sur bande à l'endroit des entrefers leur correspondant. En revanche, au croisement d'une colonne et d'une ligne, l'action additive des courants permet de générer dans l'entrefer correspondant un champ suffisant pour l'écriture d'une donnée sur bande.

Dans la réalité, lorsqu'une colonne (ou ligne) J est adressée électriquement par un courant +I, apparaît dans tous les entrefers de la colonne (ou de la ligne) excitée un champ magnétique B proportionnel à ce courant :
B = k x I, où k représente l'efficacité de la tête d'écriture.

Dû aux fuites des circuits magnétiques du composant, apparaît également sur les entrefers situés sur les colonnes voisines, un champ parasite de diaphonie Bd qui est une proportion positive de B.

Bd = kd x B, où kd représente le coefficient de diaphonie entre colonnes de la tête d'écriture.

Lorsque en fonctionnement nominal, ces champs de diaphonie qui existent pour toutes les colonnes et lignes de la tête se superposent à ceux créés par les courants, toute piste J se voit partiellement écrite avec les signaux des pistes physiquement voisines.

La diaphonie à l'écriture est très néfaste à la qualité du canal, car les données à la relecture sont entachées d'un bruit corrélé aux pistes voisines qui dégrade fortement le rapport signal à bruit.

Le processus qui donne naissance à la diaphonie dans le composant étant linéaire et réciproque (Bd = kd x k x I), on peut annuler le champ Bd sur les colonnes J-1 et J+1 par l'envoi d'un courant -kd x I de polarité inverse, dans ces colonnes lors de l'adressage de la colonne J par le courant I (voir figure 2).

D'un point de vue électrique, cette solution est compliquée car il faut de façon synchrone générer des courants de polarités opposées, donc des circuits de commande symétriques et linéaires puisque le courant est proportionnel à kd.

Cette solution n'est pas envisageable pour des raisons de dissipation de puissance car le nombre de circuits de commande nécessaires est élevé (I lignes + J colonnes) ; ce sont donc des circuits de commande simplifiés à deux états 0 volt --> + V volts qui alimentent le bobinage à travers une résistance.

La figure 3 illustre le montage électrique utilisé. La capacité C, de faible valeur, est destinée à augmenter le temps de montée du courant dans les bobinages. Le point commun des bobinages fixé à + V/2 permet de créer des courants +I et -I à partir d'une seule tension.

La contrainte sur la nature des circuits de commande impose donc une autre solution qui permet la correction de diaphonie magnétique avec le respect de polarité.

La Demande de Brevet français n° FR-A-2 699 722 décrit un dispositif prévoyant des résistances de couplage pour compenser la diaphonie, tel que défini dans le préambule de la revendication 1.

Dans la configuration de base, tous les bobinages du composant présentent une phase magnétique identique, c'est-à-dire qu'un courant +I ferait naître dans tous les entrefers un champ +B = +k x I : dans ces conditions le courant de correction reste Id = -kd x I de signe opposé.

En alternant la phase magnétique d'un bobinage sur deux sur tout le composant, donc avec un bobinage bobiné dans un sens, puis le suivant en sens inverse, il faut également alterner le signe du courant pour générer un champ magnétique de même signe sur tous les entrefers.

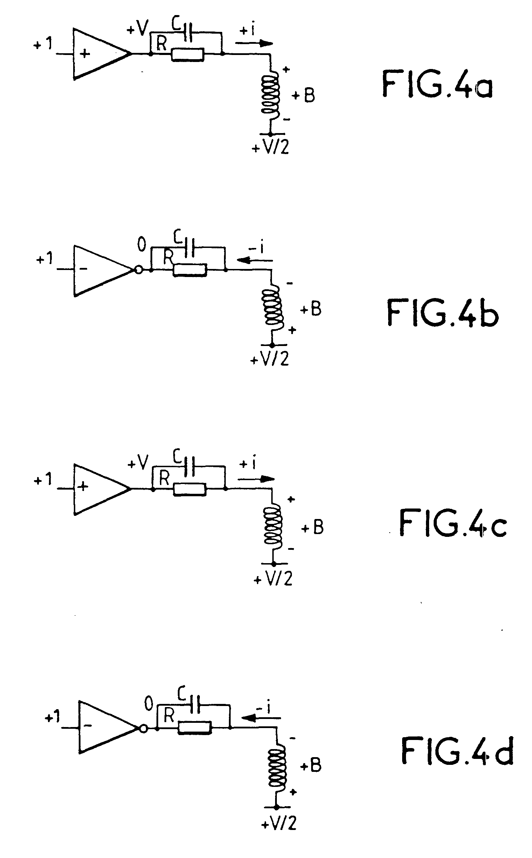

Ce principe est appliqué sur l'ensemble des lignes et colonnes du composant. On remarque sur les figures 4a à 4d qu'une information électrique +1 donne bien un champ magnétique +B dans l'entrefer.

Dans cette configuration, on corrige la diaphonie créée par la bobine J en injectant dans J-1 et J+1 le courant qui fait naître un champ inverse au champ de diaphonie en J-1 et J+1 : l'inversion de polarité magnétique d'un bobinage à l'autre détermine un courant de correction en J-1 et J+1 de même signe que celui en J, puisque l'opposition de phase est réalisée par câblage.

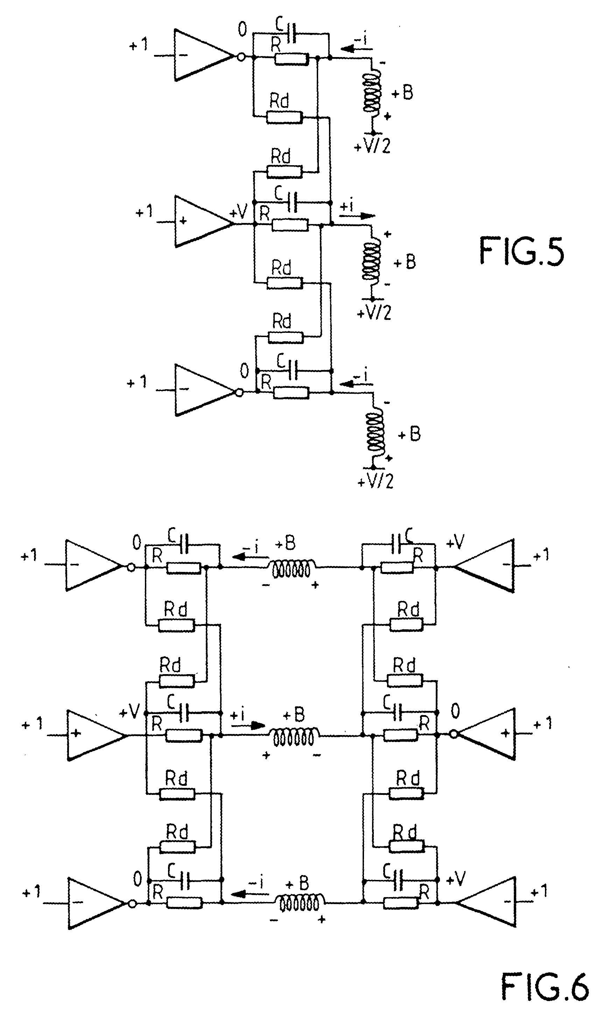

La correction de diaphonie du composant est alors réalisable uniquement avec des composants passifs, comme représenté sur la figure 5. Les résistances de correction de diaphonie, Rd dérivent une partie kd du courant de J vers J-1 et J+1, et font naître le champ magnétique qui annule le champ parasite.

Dans le cas où on réalise un circuit de commande symétrique pour des raisons de temps de montée du courant dans une impédance selfique, le nombre de composants est doublé, et le schéma d'un tel circuit est alors représenté en figure 6.

Dans le cas d'une tête magnétique matricielle comportant 1024 entrefers d'écriture répartis en 16 colonnes et 64 lignes, le montage électrique emploie 64 circuits de commande simples pour les lignes et 16 circuits de commande en pont pour les colonnes : cette configuration demande :
- 64 + 2x16 = 96 circuits de commande
- 64 + 2x16 = 96 résistances de contrôle du courant des bobinages
- 2x64 + 4x16 = 192 résistances de correction de diaphonie.

Le composant d'écriture nécessite un réseau de 288 résistances pour fonctionner correctement.

L'invention a pour objet de simplifier la conception et la réalisation des circuits de correction de diaphonie et même de réduire le nombre de résistances nécessaires.

L'invention concerne donc un dispositif de commande électrique à correction de diaphonie pour têtes magnétiques d'enregistrement/lecture, comprenant plusieurs dispositifs commandables électriquement chacun par une résistance de limitation, et par des éléments résistifs de couplage, chaque élément résistif de couplage couplant une résistance de limitation à une résistance de limitiation voisine, caractérisé en ce que les résistances de limitation de courant sont des éléments résistifs de limitation en couches planes disposés sur une première face de substrat et en ce que les éléments résistifs de couplage sont également réalisés en couches planes et sont disposés transversalement aux éléments résistifs de limitation et interconnectant ces éléments résistifs de limitation

L'invention concerne également un dispositif caractérisé en ce qu'il comporte :
- un premier ensemble d'éléments résistifs de couplage connectant chacune une entrée d'un élément résistif de limitation de rang pair à une sortie d'un élément résistif de limitation voisin de rang impair ;
- un deuxième ensemble d'éléments résistifs isolés des premiers connectant chacun une sortie d'un élément résistif de limitation de rang pair à une entrée d'un élément résistif de limitation de rang impair.

L'invention est applicable à la commande d'une tête matricielle d'enregistrement/lecture.

Les différents objets et caractéristiques de l'invention apparaîtront plus clairement dans la description qui va suivre et dans les figures annexées qui représentent :
- les figures 1 à 6, des dispositifs de commande électromagnétiques connus dans la technique ;
- la figure 7, un exemple général du dispositif de commande à correction de diaphonie selon l'invention ;
- la figure 8, un autre mode de réalisation du dispositif de commande selon l'invention ;
- la figure 9, une variante de réalisation du dispositif de la figure 8 ;
- les figures 10a et 10b, un mode de réalisation plus complexe du dispositif de commande selon l'invention ;
- la figure 11, un dispositif de commande comportant un condensateur en parallèle avec chaque élément résistif de limitation de courant ;
- la figure 12, un dispositif de commande comportant des condensateurs en parallèle avec les éléments résistifs de couplage ;
- la figure 13, un exemple d'application à une tête matricielle.

Le dispositif proposé pour remplacer l'ensemble des résistances de limitation de courant et de diaphonie, est une surface résistive présentant une anisotropie de résistivité selon ses axes X et Y. Cette anisotropie est obtenue soit par un facteur de forme du dispositif, soit par un choix de motifs résistifs qui se croisent à 90 degrés.

La structure la plus simple remplissant la fonction est une surface rectangulaire présentant une certaine résistance ohmique par "carré".

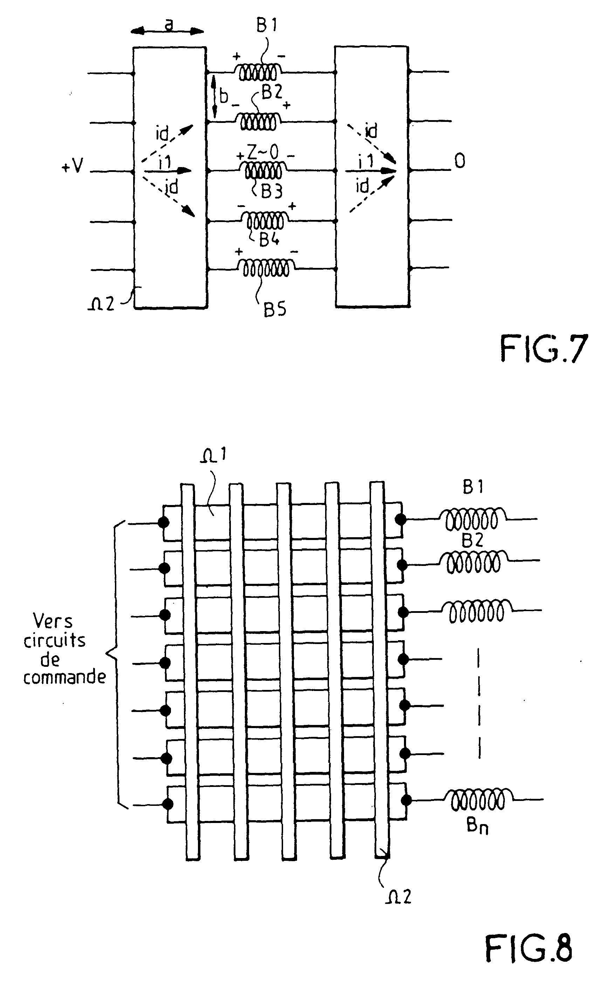

La figure 7 représente la structure dans la configuration dite en pont. Les dispositifs électromagnétiques à commander sont représentés par les bobinages B1 à B5. Comme on peut le voir par les signes "+" et "-" associés à leurs accès, ces bobinages ont des sens de bobinages alternés comme cela a été expliqué en relation avec les figures 5 et 6. Des circuits de commande envoient à basse impédance les tensions +V et 0 sur chacune des entrées du réseau : la longueur "a" dimensionne la résistance Ω2 qui réalisera la limitation de courant i1 dans chaque bobinage, d'impédance Z très faible, tandis que la distance entre plots "b" détermine la proportion id du courant principal qui est dérivée vers les bobinages voisins.

Cette structure réalise un mixage analogique de courant, inter-bobinages.

Dans la configuration de fonctionnement de la tête matricielle, les 288 résistances sont remplacées par 3 "mixeurs résistifs" ; 1 pour l'ensemble des 64 lignes, et 2 pour les 16 colonnes qui sont adressées en pont.

Selon le coefficient kd de correction à réaliser, le ratio des dimensions (a:b) qui détermine le kd du dispositif peut conduire à un dimensionnement de l'ensemble incompatible avec l'environnement du composant. Dans ce cas, on réalise une structure constituée de deux couches résistives en contact croisées constituées chacune de bandes parallèles de résistances différentes, comme représenté sur la figure 8.

Le dimensionnement géométrique du dispositif est alors indépendant de ses caractéristiques électriques.

Les éléments tels que Ω1 représentent des éléments résistifs de limitation de courant connectant chaque dispositif électromagnétique B1 à Bn à commander aux circuits de commande.

L'élément tel que Ω2 représenté perpendiculairement à Ω1 est un élément résistif de couplage en contact électrique avec chaque élément résistif de limitation de courant Ω1.

Selon un mode de réalisation, les éléments résistifs Ω1 sont réalisés en couche mince ou épaisse sur une plaque de substrat. Les éléments Ω2 sont réalisés également en couche mince ou épaisse sur les éléments Ω1 et sur la plaque de substrat.

La calibration des dimensions en épaisseur et notamment en largeur permet d'ajuster les valeurs des résistances. De plus, selon la figure 8, le nombre d'éléments Ω2 permet d'ajuster le couplage.

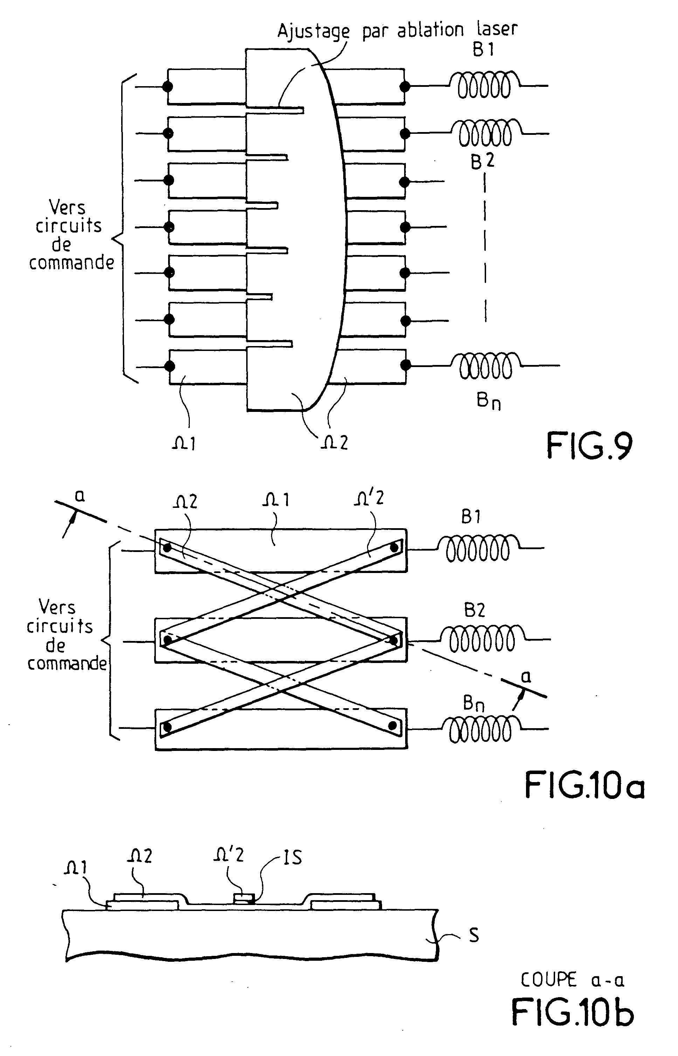

L'élément résistif de couplage peut être pré-formé, comme représenté en figure 9 pour prendre en compte une caractéristique constante du composant à corriger. Sur la figure 9, l'élément Ω2 a une forme adaptée aux couplages à réaliser. De plus, entre les éléments résistifs Ω1, il est prévu des fentes dans l'élément Ω2 pour ajuster à volonté les couplages résistifs entre éléments Ω1.

Dans un contexte industriel, le dispositif peut être ajusté par laser, et ceci au niveau de chaque bobinage, par ablation partielle des couches résistives pour ajustage du courant principal et des courants de correction de diaphonie.

Les figures 10a et 10b représentent une variante de réalisation de l'invention dans laquelle on prévoit des éléments résistifs tel que Ω2 et Ω'2 connectant l'accès de chaque élément résistif Ω1 du côté circuit de commande à l'accès côté bobinage des éléments résistifs immédiatement voisines. On obtient ainsi un couplage résistif entre entrée et sortie comme est représenté en figures 5 et 6.

La figure 10b représente une vue en coupe qui met en évidence que les éléments résistifs Ω2 et Ω'2 sont isolés entre eux par une couche d'isolant I1.

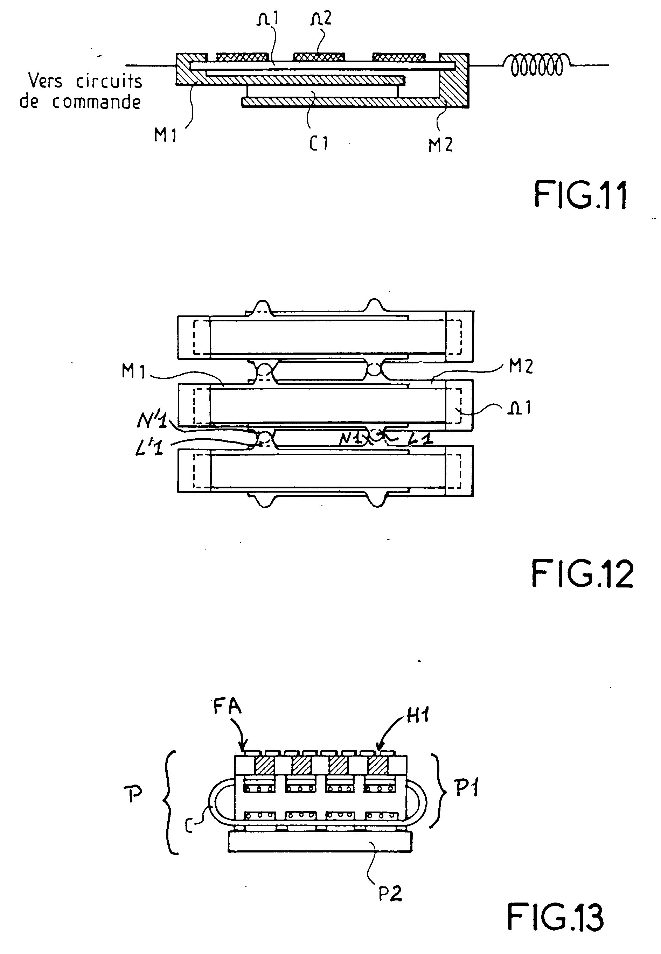

La nécessité d'obtenir des temps de montée de courant dans les bobinages impose de rajouter des capacités en parallèle des résistances de limitation de courant : la coupe de la figure 11 montre un type de réalisation permettant d'intégrer ce composant dans le dispositif.

Le couplage capacitif est réalisé par deux couches de métallisation en regard. Ce dispositif est reproduit pour chaque commande de bobinage.

La figure 11 est une représentation simplifiée d'un tel mode de réalisation. Elle est appliquée au dispositif de la figure 8 comportant plusieurs éléments résistifs de couplage Ω2.

Ce dispositif comporte au dos de l'élément Ω1, une première métallisation M1 connectée à une extrémité de l'élément Ω1 et une deuxième métallisation M2 connectée à l'autre extrémité de l'élément Ω1. Entre les deux métallisations est prévu un matériau diélectrique C1.

Selon un mode de réalisation plus pratique, les éléments résistifs Ω1 et Ω2 peuvent être réalisés sur une face d'un substrat et les condensateurs constitués par les métallisations M1, M2 et le diélectrique C1 peuvent être réalisés sur la face opposée du substrat.

La figure 12 représente un dispositif selon l'invention dans lequel on prévoit des condensateurs de couplage entre les entrées des éléments résistifs Ω1 et les sorties des éléments résistifs voisins. Sur cette figure 12, les éléments résistifs de couplage Ω2 n'ont pas été représentés.

La réalisation de ces condensateurs utilise les métallisations M1 et M2 décrites en relation avec la figure 11.

Chaque métallisation M1 associée à un élément résistif Ω1 possède une languette conductrice L1, L'1 de chaque côté de la métallisation qui s'étend vers la métallisation M1 de l'élément résistif voisin.

Il en est de même de chaque métallisation M2 qui possède des languettes N1 et N'1.

Chaque languette L1, L'1 d'un élément résistif est situé au-dessus d'une languette N1 ou N'1 d'un élément résistif voisin et les deux languettes sont séparées par un matériau diélectrique de façon à former un condensateur. On réalise ainsi des condensateurs en parallèle avec les éléments résistifs de couplage Ω2 dont la valeur dépend de la surface en regard.

La figure 13 représente un exemple d'intégration du dispositif de commande décrit précédemment à une tête magnétique matricielle réalisée sous forme d'une plaque P. Une face de la plaque P1 possède les pôles des têtes magnétiques et les entrefers. Cette face sert donc de face active. Le dispositif de commande précédemment décrit réalisé sous forme d'une plaque P2 est accolée à la face principale de la plaque P1 opposée à la face active.

Une tête magnétique matricielle peut être réalisée comme cela est décrit dans la Demande de Brevet français n° 2 648 940 correspondant à EP-A-0.406.052 et on lui accole une plaque P2 puis on prévoit la connexion des bobinages aux circuits de la plaque P2.

## Revendications

1. Dispositif de commande électrique à correction de diaphonie pour têtes magnétiques d'enregistrement/lecture, comprenant plusieurs dispositifs commandables électriquement chacun par une résistance de limitation (Ω1), et par des éléments résistifs de couplage (Ω2), chaque élément résistif de couplage couplant une résistance de limitation (Ω1) à une résistance de limitation voisine, **caractérisé en ce que** les résistances de limitation de courant (Ω1) sont des éléments résistifs de limitation en couches planes disposés sur une première face de substrat (S) et en ce que les éléments résistifs de couplage (Ω2) sont également réalisés en couches planes et sont disposés transversalement aux éléments résistifs de limitation et interconnectant ces éléments résistifs de limitation.

2. Dispositif selon la revendication 1, **caractérisé en ce que** l'élément résistif de couplage (Ω2) présente une anisotropie de résistivité présentant un axe parallèle aux éléments résistifs de limitation.

3. Dispositif selon la revendication 1, **caractérisé en ce que** les éléments résistifs de limitation (Ω1) sont parallèles entre eux.

4. Dispositif selon la revendication 3, **caractérisé en ce qu**'il comporte un seul élément résistif de couplage (Ω2) qui est sensiblement perpendiculaire aux éléments résistifs de limitation.

5. Dispositif selon la revendication 4, **caractérisé en ce que** l'élément résistif de couplage (Ω2) a une forme linéaire et de section constante.

6. Dispositif selon la revendication 4, **caractérisé en ce que** l'élément résistif de couplage a une forme non linéaire et de section variable de façon à ce que la valeur de chaque élément résistif de couplage entre deux éléments résistifs de limitation puisse être adaptée.

7. Dispositif selon la revendication 6, **caractérisé en ce que** l'élément résistif de couplage possède des encoches de réglage de valeur de résistance situées entre les éléments résistifs de limitation.

8. Dispositif selon la revendication 3, **caractérisé en ce qu**'il comporte
- un premier ensemble d'éléments résistifs de couplage connectant chacune une entrée d'un élément résistif de limitation de rang pair à une sortie d'un élément résistif de limitation voisin de rang impair ;
- un deuxième ensemble d'éléments résistifs isolés des premiers connectant chacun une sortie d'un élément résistif de limitation de rang pair à une entrée d'un élément résistif voisin de limitation de rang impair.

9. Dispositif de commande électrique à correction de diaphonie selon la revendication 1, **caractérisé en ce qu**'il comprend plusieurs dispositifs électromagnétiques commandables électriquement chacun par les résistances de limitation de courant (Ω1) qui sont disposées sur une première face d'un substrat (S) en ce qu'il comporte empilées sur une deuxième face du substrat (S) opposée à la première face pour chaque élément résistif (Ω1) :
- une première couche d'un matériau conducteur (M1) connectée à une extrémité d'entrée de l'élément résistif ;
- une première couche d'un matériau diélectrique (C1) ;
- une deuxième couche d'un matériau conducteur (M2) connectée à une extrémité de sortie de l'élément résistif,
l'ensemble de la première couche de matériau conducteur (M1), de la première couche de matériau diélectrique (C1) et de la deuxième couche de matériau conducteur (M2) constituant un condensateur.

10. Dispositif selon l'une quelconque des revendications 1 à 8, **caractérisé en ce qu**'il comporte empilées :
- une première couche d'un matériau conducteur (M1) connectée à une extrémité d'entrée d'un élément résistif de limitation de courant (Ω1) ;
- une première couche d'un matériau diélectrique (C1) ;
- une deuxième couche d'un matériau conducteur (M2) connectée à une extrémité de sortie dudit élément résistif de limitation de courant (Ω1).

11. Dispositif selon la revendication 10, **caractérisé en ce que** les première et deuxième couches de matériau conducteur (M1, M2) de chaque élément résistif de limitation de courant (Ω1) possèdent des prolongements vers les éléments résistifs voisins de telle façon qu'entre deux éléments résistifs de limitation de courant, un prolongement de la première couche d'un premier élément résistif soit au-dessus d'un prolongement de la deuxième couche d'un deuxième élément résistif en étant séparés par un matériau diélectrique et qu'un prolongement de la deuxième couche du premier élément résistif soit en-dessous de la première couche du deuxième élément résistif en étant séparé par un matériau diélectrique.

12. Dispositif de commande électrique à correction de diaphonie selon la revendication 1, **caractérisé en ce que** les éléments résistifs de limitation de courant et les éléments résistifs de couplage sont réalisés en un seul dispositif possédant une surface résistive à anisotropie de résistivité selon deux axes (X et Y).

13. Dispositif de commande d'un ensemble de tête magnétique appliquant le dispositif selon l'une des revendications précédentes, **caractérisé en ce qu**'il comporte autant d'éléments résistifs de limitation qu'il y a de têtes magnétiques.

14. Dispositif selon la revendication 12, **caractérisé en ce que** l'ensemble de têtes magnétiques est arrangé de manière matricielle en lignes et colonnes, le dispositif comportant autant d'éléments résistifs de limitation qu'il y a de lignes et de colonnes.

15. Dispositif selon la revendication 13, **caractérisé en ce que** l'ensemble de têtes magnétiques est réalisé sous forme d'une première plaquette (P1), l'ensemble de résistances de limitation, de résistances de couplage, de condensateurs est réalisé sur une deuxième plaquette (P2), cette deuxième plaquette (P2) étant accolée à la première plaquette (P1) contre la face opposée à la face active de la matrice de têtes magnétiques comportant les pôles et entrefers d'enregistrement/lecture.

## Patentansprüche

1. , Elektrische Steuervorrichtung mit Nebensprechkorrektur für Aufzeichnungs/Lese-Magnetköpfe, mit mehreren Vorrichtungen, wovon jede durch einen Begrenzungswiderstand (Ω1) und durch resistive Kopplungselemente (Ω2) elektrisch steuerbar ist, wobei jedes resistive Kopplungselement einen Begrenzungswiderstand (Ω1) mit einem benachbarten Begrenzungswiderstand koppelt, **dadurch gekennzeichnet**, daß die Strombegrenzungswiderstände (Ω1) resistive Begrenzungselemente in ebenen Schichten sind, die auf einer ersten Fläche eines Substrats (S) angeordnet sind, und daß die resistiven Kopplungselemente (Ω2) ebenfalls in ebenen Schichten hergestellt sind, quer zu den resistiven Begrenzungselementen angeordnet sind und diese resistiven Begrenzungselemente miteinander verbinden.

2. Vorrichtung nach Anspruch 1, **dadurch gekennzeichnet**, daß das resistive Kopplungselement (Ω2) eine Anisotropie der Resistivität aufweist, die eine zu den resistiven Begrenzungselementen parallele Achse besitzt.

3. Vorrichtung nach Anspruch 1, **dadurch gekennzeichnet**, daß die resistiven Begrenzungselemente (Ω1) zueinander parallel sind.

4. Vorrichtung nach Anspruch 3, **dadurch gekennzeichnet**, daß sie ein einziges resistives Kopplungselement (Ω2) umfaßt, das zu den resistiven Begrenzungselementen im wesentlichen senkrecht ist.

5. Vorrichtung nach Anspruch 4, **dadurch gekennzeichnet**, daß das resistive Kopplungselement (Ω2) eine geradlinige Form mit konstantem Querschnitt hat.

6. Vorrichtung nach Anspruch 4, **dadurch gekennzeichnet**, daß das resistive Kopplungselement eine nicht geradlinige Form und einen veränderlichen Querschnitt hat, derart, daß der Wert jedes resistiven Kopplungselements zwischen zwei resistiven Begrenzungselementen angepaßt werden kann.

7. Vorrichtung nach Anspruch 6, **dadurch gekennzeichnet**, daß das resistive Kopplungselement Aussparungen für die Einstellung des Widerstandswertes, die sich zwischen den resistiven Begrenzungselementen befinden, besitzt.

8. Vorrichtung nach Anspruch 3, **dadurch gekennzeichnet**, daß sie umfaßt:
- eine erste Gesamtheit resistiver Kopplungselemente, wovon jedes einen Eingang eines resistiven Begrenzungselements mit geradzahligem Rang mit einem Ausgang eines benachbarten resistiven Begrenzungselements mit ungeradzahligem Rang verbindet;
- eine zweite Gesamtheit resistiver Elemente, die von den ersten isoliert sind und jeweils einen Ausgang eines resistiven Begrenzungselements mit geradzahligem Rang mit einem Eingang eines benachbarten resistiven Begrenzungselements mit ungeradzahligem Rang verbinden.

9. Elektrische Steuervorrichtung mit Nebensprechkorrektur nach Anspruch 1, **dadurch gekennzeichnet**, daß sie mehrere elektromagnetische Vorrichtungen umfaßt, wovon jede durch Strombegrenzungswiderstände (Ω1), die auf einer ersten Fläche eines Substrats (S) angeordnet sind, elektrisch steuerbar ist, und daß sie für jedes resistive Element (Ω1) auf einer zweiten Fläche des Substrats (S) gegenüber der ersten Fläche in einem Stapel umfaßt:
- eine erste Schicht aus einem leitenden Werkstoff (M1), der mit einem ersten Eingangsende eines resistiven Elements verbunden ist;
- eine erste Schicht aus einem dielektrischen Werkstoff (C1);
- eine zweite Schicht aus einem leitenden Schicht (M2), der mit einem Ausgangsende des resistiven Elements verbunden ist,
wobei die Gesamtheit aus der ersten Schicht des leitenden Werkstoffs (M1), der ersten Schicht des dielektrischen Werkstoffs (C1) und der zweiten Schicht des leitenden Werkstoffs (M2) einen Kondensator bildet.

10. Vorrichtung nach einem der Ansprüche 1 bis 8, **dadurch gekennzeichnet**, daß sie in einem Stapel umfaßt:
- eine erste Schicht eines leitenden Werkstoffs (M1), der mit einem Eingangsende eines resistiven Strombegrenzungselements (Ω1) verbunden ist;
- eine erste Schicht aus einem dielektrischen Werkstoff (C1);
- eine zweite Schicht aus einem leitenden Werkstoff (M2), der mit einem Ausgangsende des resistiven Strombegrenzungselements (Ω1) verbunden ist.

11. Vorrichtung nach Anspruch 10, **dadurch gekennzeichnet**, daß die ersten und zweiten Schichten des leitenden Werkstoffs (M1, M2) jedes resistiven Strombegrenzungselements (Ω1) Verlängerungen zu den benachbarten resistiven Elementen besitzen, derart, daß sich zwischen zwei resistiven Strombegrenzungselementen eine Verlängerung der ersten Schicht eines ersten resistiven Elements über einer Verlängerung der zweiten Schicht eines zweiten resistiven Elements befindet und hiervon durch einen dielektrischen Werkstoff getrennt ist, und daß sich eine Verlängerung der zweiten Schicht des ersten resistiven Elements unterhalb der ersten Schicht des zweiten resistiven Elements befindet und hiervon durch einen dielektrischen Werkstoff getrennt ist.

12. Elektrische Steuervorrichtung mit Nebensprechkorrektur nach Anspruch 1, **dadurch gekennzeichnet**, daß die resistiven Strombegrenzungselemente und die resistiven Kopplungselemente aus einer einzigen Vorrichtung hergestellt sind, die eine resistive Oberfläche mit Resistivitätsanisotropie längs zweier Achsen (X und Y) besitzt.

13. Steuervorrichtung für eine Gesamtheit von Magnetköpfen, in der die Vorrichtung nach einem der vorhergehenden Ansprüche angewendet wird, **dadurch gekennzeichnet**, daß sie so viele resistive Begrenzungselemente umfaßt, wie Magnetköpfe vorhanden sind.

14. Vorrichtung nach Anspruch 12, **dadurch gekennzeichnet**, daß die Gesamtheit der Magnetköpfe matrixförmig in Zeilen und Spalten angeordnet ist, wobei die Vorrichtung so viele resistive Begrenzungselemente umfaßt, wie Zeilen und Spalten vorhanden sind.

15. Vorrichtung nach Anspruch 13, **dadurch gekennzeichnet**, daß die Gesamtheit der Magnetköpfe in Form eines ersten Plättchens (P1) hergestellt ist, wobei die Gesamtheit der Begrenzungswiderstände, der Kopplungswiderstände und der Kondensatoren auf einem zweiten Plättchen (P2) hergestellt ist, wobei dieses zweite Plättchen (P2) an das erste Plättchen (P1) gegen die Fläche gegenüber der aktiven Fläche der Matrix aus Magnetköpfen, die Aufzeichnungs-/Lese-Pole und -Luftspalte umfaßt, geklebt ist.

## Claims

1. Electrical control device with crosstalk correction for magnetic recording/reading heads, comprising several devices each electrically controllable by a limiting resistor (Ω1), and by resistive coupling elements (Ω2), each resistive coupling element coupling a limiting resistor (Ω1) to a neighbouring limiting resistor, **characterized in that** the current-limiting resistors (Ω1) are resistive limiting elements in the form of plane layers disposed on a first face of a substrate (S) and in that the resistive coupling elements (Ω2) are also made in the form of plane layers and are disposed transversely to the resistive limiting elements and interconnecting these resistive limiting elements.

2. Device according to Claim 1, **characterized in that** the resistive coupling element (Ω2) exhibits an anisotropy of resistivity exhibiting an axis parallel to the resistive limiting elements.

3. Device according to Claim 1, **characterized in that** the resistive limiting elements (Ω1) are parallel to one another.

4. Device according to Claim 3, **characterized in that** it comprises a single resistive coupling element (Ω2) which is substantially perpendicular to the resistive limiting elements.

5. Device according to Claim 4, **characterized in that** the resistive coupling element (Ω2) has a linear shape and constant cross section.

6. Device according to Claim 4, **characterized in that** the resistive coupling element has a nonlinear shape and variable cross section in such a way that the value of each resistive coupling element between two resistive limiting elements can be adapted.

7. Device according to Claim 6, **characterized in that** the resistive coupling element possesses resistance value adjusting notches situated between the resistive limiting elements.

8. Device according to Claim 3, **characterized in that** it comprises:
- a first assembly of resistive coupling elements each connecting an input of a resistive limiting element of even rank to an output of a neighbouring resistive limiting element of odd rank;
- a second assembly of resistive elements insulated from the first ones each connecting an output of a resistive limiting element of even rank to an input of a neighbouring resistive limiting element of odd rank.

9. Electrical control device with crosstalk correction according to Claim 1, **characterized in that** it comprises several electromagnet devices each electrically controllable by the current-limiting resistors (Ω1) which are disposed on a first face of a substrate (S) and in that it comprises stacked on a second face of the substrate (S) opposite the first face for each resistive element (Ω1) :
- a first layer of a conducting material (M1) connected to an input end of the resistive element;
- a first layer of a dielectric material (C1) ;
- a second layer of a conducting material (M2) connected to an output end of the resistive element,
the assembly of the first layer of conducting material (M1), of the first layer of dielectric material (C1) and of the second layer of conducting material (M2) constituting a capacitor.

10. Device according to any one of Claims 1 to 8, **characterized in that** it comprises stacked:
- a first layer of a conducting material (M1) connected to an input end of a resistive current-limiting element (Ω1) ;
- a first layer of a dielectric material (C1) ;
- a second layer of a conducting material (M2) connected to an output end of the said resistive current-limiting element (Ω1).

11. Device according to Claim 10, **characterized in that** the first and second layers of conducting material (M1, M2) of each resistive current-limiting element (Ω1) possess extensions towards the neighbouring resistive elements such that, between two resistive current-limiting elements, an extension of the first layer of a first resistive element is above an extension of the second layer of a second resistive element while being separated by dielectric material and that an extension of the second layer of the first resistive element is below the first layer of the second resistive element while being separated by dielectric material.

12. Electrical control device with crosstalk correction according to Claim 1, **characterized in that** the resistive current-limiting elements and the resistive coupling elements are made as a single device possessing a resistive surface with anisotropy of resistivity according to two axes (X and Y).

13. Device for controlling a magnetic head assembly applying the device according to one of the preceding claims, **characterized in that** it comprises as many resistive limiting elements as there are magnetic heads.

14. Device according to Claim 12, **characterized in that** the assembly of magnetic heads is arranged in a matrix manner as rows and columns, the device comprising as many resistive limiting elements as there are rows and columns.

15. Device according to Claim 13, **characterized in that** the assembly of magnetic heads is made in the form of a first wafer (P1), the assembly of limiting resistors, of coupling resistors, of capacitors is made on a second wafer (P2), this second wafer (P2) being affixed to the first wafer (P1) against the opposite face to the active face of the matrix of magnetic heads comprising the poles and gaps for recording/reading.
